# EUROPEAN PATENT APPLICATION

(11) **EP 2 644 310 A1**
(43) Date of publication of application: **02.10.2013**
(21) Application number: 13160591.7
(22) Date of filing: 22.03.2013
(51) Int. Cl.: B23K 26/34, B23P 15/04, F01D 5/00, F01D 5/28

(54) **A method of joining at least two components, a method for rendering a component resistant to erosion, and a turbine blade**

(30) Priority: 28.03.2012 US 201213432776
(71) Applicant: General Electric Company, Schenectady, New York 12345 (US)
(72) Inventor: Jones, Michael Lewis, Schenectady, NY New York 12345 (US); Adis, William Edward, Schenectady, NY New York 12345 (US); Ganesh, Swami, Schenectady, NY New York 12345 (US); Spiegel, Lyle B., Schenectady, NY New York 12345 (US)
(74) Representative: Cleary, Fidelma

(57) **Abstract**

A method (500) of joining at least two components, a method of preventing erosion of a base component and a turbine blade are provided. The method (500) of joining at least two components includes providing (502) a laser cladding apparatus, aligning a first component and second component, and joining (510) the first and second components by laser cladding. The first component includes a first joining surface adjacent to a seconding joining surface of the second component. The first joining surface and the second joining surface are joined by laser cladding along a joining plane. Joining material from the laser cladding provides at least one joining (510) layer between the first joining surface and the second joining surface. The first and second joining surfaces include a bevel angle.

## Description

The present invention relates generally to power generation systems and more specifically to a method of joining at least two components, a method of rendering a component resistant to erosion and a turbine blade.

Components in power generation systems, such as the turbine rotor blades and the turbine stator blades that are used in turbine equipment are exposed to an erosive environment in which these components are susceptible to erosion caused by water droplets in the steam and by fine dust from oxide scale. In particular, water droplets can cause substantial erosion of rear-stage turbine blades, where such water droplets are mixed with the steam for turbine driving. Erosion of turbine blades is problematic because it results in blade thinning and fatigue breakdown of the blade brought about by erosion.

Various erosion preventive measures have been implemented to try to increase the durability of turbine components against erosion. One of these preventative measures involves methods that use low heat-input build-up welding with a high energy-density heat source, such as laser beams to build up a plurality of single layers of on the turbine component.

Build-up welding takes a significant amount to time to achieve the desired erosion protection layer. Another problem with using a build-up method is that the erosion layer must also be machined after formation to the desired blade geometry, increasing processing steps and time in manufacturing. Yet another problem with build-up welding methods using laser beams is that STELLITE®, a traditional erosion shielding material, has a considerable amount of carbon, of about 1.0 wt %. As a result, a complex carbon dilution layer forms through mixing of the STELLITE® layer and the matrix of the underlying turbine component during welding, even with low heat input. This carbon dilution layer is undesirable in welding operations, as it may result in high-temperature cracking at build-up welded portions. In addition to the problem posed by the formation of the carbon dilution layer, the residual stresses (tensile residual stresses) caused by contraction during build-up welding increases as the STELLITE® build-up amount becomes greater. These residual stresses, which are difficult to remedy significantly through heat treatment after build-up welding, may give rise to breakage in the form of peeling of the end of the build-up portion, or cracking at the weld metal portions, in the environment where the turbine operates.

When STELLITE® is build-up welded by laser the hardness of STELLITE® weld metal portions becomes extremely large compared to that of ordinary forged parts. When using STELLITE® No. 6, for instance, the Rockwell C scale hardness of a forged part is of about 35 to 40, whereas the hardness of a build-up welded portion formed using laser welding exhibits a higher value, of 50 or more. That is, build-up welded portions formed using laser are extremely hard, and hence susceptible to cracking in the welded portions. A rise in the hardness of the build-up welded portions is accompanied by an increase in strength, but also by a drop in ductility and toughness. That is, the hardness of the build-up welded portions promotes the occurrence of cracking in weld metal portions and breakage in the form of peeling of the end of the build-up portion.

Therefore, a method of joining at least two components, a method of preventing erosion of a base component and an erosion resistant turbine blade for power generation systems that do not suffer from the above drawbacks is desirable in the art.

According to an exemplary embodiment of the present disclosure, a method of joining at least two components is provided. The method includes providing a laser cladding apparatus and aligning and joining a first component and a second component. The first component has a first joining surface adjacent to a second joining surface of a second component. In the step of joining, the first joining surface and the second joining surface are joined along a joining plane by the laser cladding apparatus. A joining material from the laser cladding apparatus provides at least one joining layer between the first joining surface and the second joining surface. The first and second joining surfaces include a bevel angle.

According to another exemplary embodiment of the present disclosure, a method for rendering of a component resistant to erosion is provided. The method includes providing a first component and an erosion preventative component, the erosion preventive component comprising a unitary structure. The method includes aligning the first component with the erosion preventative component along a joining plane. The method includes joining the first component with the erosion preventative component using high-density energy irradiation. The step of joining includes a joining material that is excited by the high-density energy irradiation, wherein the joining material fuses the erosion preventative component to the first component. The first component and the erosion preventive component include a bevel angle.

According to another exemplary embodiment of the present disclosure a turbine blade is provided. The turbine blade includes an airfoil having a leading edge and an erosion shield joined to the leading edge of the airfoil with a joining material. The airfoil and erosion shield are joined by at least one joining layer formed by the joining material and a laser cladding process.

Various features and advantages of the present invention will be apparent from the following more detailed description of the preferred embodiments, taken in conjunction with the accompanying drawings which illustrate, by way of example, the principles of the invention, and in which:
FIG. 1 is a partial perspective view of an embodiment of a steam turbine stage.
FIG. 2 is a partial cross-sectional view of an embodiment of an airfoil of the steam turbine of FIG. 1 of the present disclosure.
FIG. 3 is a perspective view of an apparatus for joining a first component and second component
FIG. 4 is a detailed schematic of a configuration of two erosion preventative components on the airfoil of FIG. 2.
FIG. 5 is a flow chart of the method of forming the leading edge of the airfoil of the present disclosure.

Wherever possible, the same reference numbers will be used throughout the drawings to represent the same parts.

Various aspects of the present invention provide a method of joining at least two components, a method of preventing erosion of a base component and an erosion resistant turbine blade for power generation systems that do not suffer from the drawbacks in the prior art.

One advantage of various embodiments of the present disclosure includes a localized thicker erosion shield for increased protection against water droplets on the last stage buckets (LSBs). Another advantage of various embodiments of the present disclosure includes a method that applies an erosion shield with less surface disruption of the base component metal and less surface disruption of the erosion shield metal. Another advantage of various embodiments of the present disclosure is that the method allows for customized alloy spray for cladding and joining two different materials, namely the base component metal and the erosion shield metal. Yet another advantage of various embodiments of the present disclosure is that the method allows for stronger, less stressed joining of two dissimilar metals. Yet another advantage of various embodiments of the present disclosure is that the joining method provides a more cost effective process of applying an erosion shield to a base component than using multiple cladding passes with electron beam (EB)/TIG welding with shims to apply the erosion shield. Yet another advantage of various embodiments of the present disclosure is reduced cycle time for applying the erosion shield than using traditional electron beam (EB)/TIG welding with shims. Another advantage of various embodiments of the present disclosure is that the method prevents diffusion of carbides across the joined surface of the base metal component and the erosion shield component.

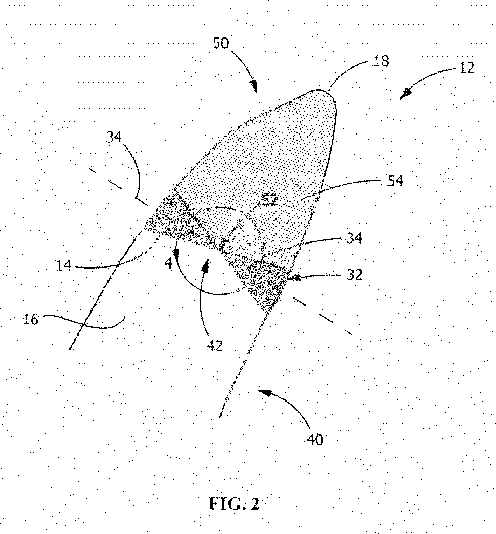

Components constructed using a method of the present disclosure have increased structural integrity because the joining method prevents diffusion of carbides across the joined surface of the base metal component and the attached component. An embodiment of the disclosure is shown in FIG. 2 but the present disclosure is not limited to the illustrated structure.

Power generation systems include, but are not limited to, gas turbines, steam turbines, and other turbine assemblies. As referred to herein, turbine blades and turbine buckets are used interchangeably.

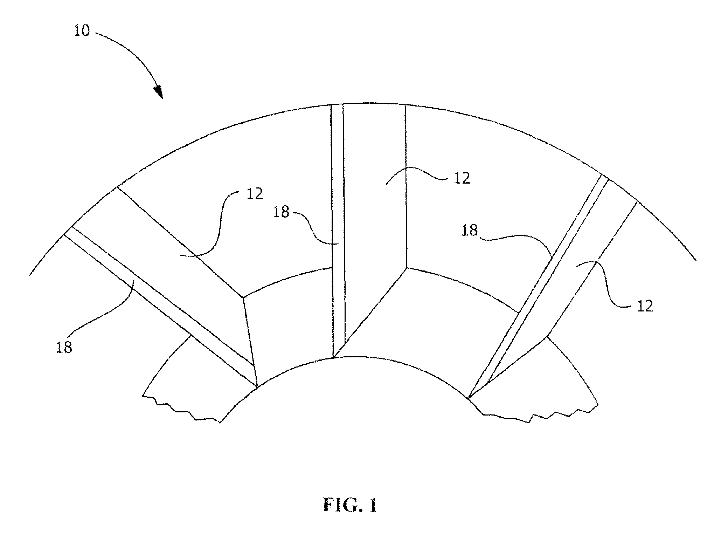

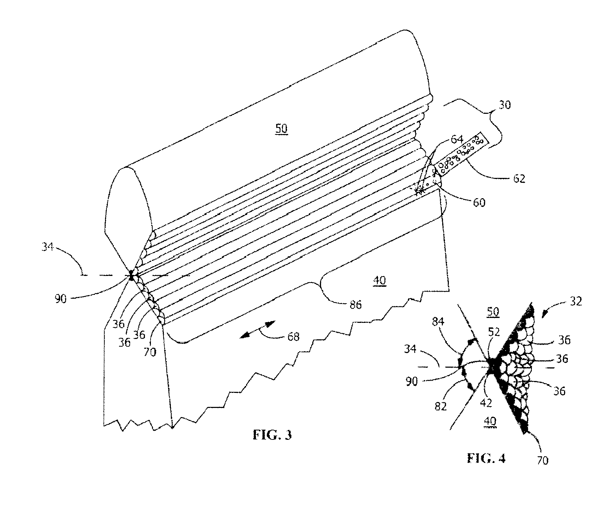

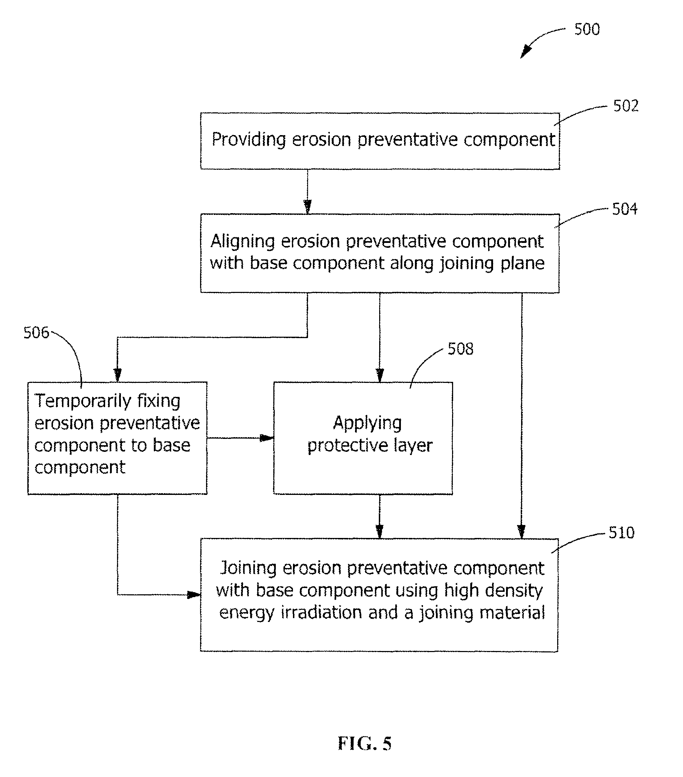

FIG. 1 depicts an embodiment of a steam turbine bucket 10 having a plurality of airfoils 12 having a leading edge 18. As shown in FIG. 2, each airfoil 12 includes a forward face 14 at a forward end 16 of each airfoil 12. A leading edge 18 is formed at forward face 14 using the disclosed joining method, bonding an erosion shield 54 to forward face 14. As shown in FIG. 5, the method of joining at least two components 40 and 50 includes providing a laser cladding apparatus 30, aligning first component 40 and second component 50 and joining first component 40 and second component 50. As shown in FIGS. 2-4, first component 40 includes a first joining surface 42 adjacent to a second joining surface 52 second component 50. The step of joining includes joining first joining surface 42 and second joining surface 52 of first and second components 40 and 50 along a joining plane 34 by laser cladding apparatus 30 (see FIG. 3). Joining material 32 from laser cladding apparatus 30 provides at least one joining layer 36 between first joining surface 42 and second joining surface 52 (see FIG. 3).

As shown in FIG. 3, laser cladding apparatus 30 includes a laser beam 64 and nozzle 62 for depositing powered material 60 to form at least one joining layer 36. An example of suitable laser cladding apparatus 30 include, but are not limited to, a CO₂ laser, a Nd:YAG laser, a LED laser, a diode laser or a solid state laser. Lasers operate in pulsed or continuous mode with an output of between 100 watts and several kilowatts. Laser cladding apparatus 30 operates with a shielding gas, such as, but not limited to argon and nitrogen.

Returning to FIG. 2, turbine blade airfoil includes first component 40. Generally, first component 40 is constructed from materials including suitable known turbine blade or bucket materials, such as for example but not limited to steel, stainless steel, precipitation-hardened steel, alloys thereof, and combinations thereof. A suitable example of a material for first component 40 includes, but is not limited to, GTD 450 or Custom 450® available from Carpenter Technology Corporation, Reading, PA. First component 40 includes first joining surface 42. First joining surface 42 is machined or formed at forward face 14 of airfoil 12. First joining surface includes bevel angle 82 from approximately 0 degrees to approximately 45 degrees, or alternatively approximately 5 degrees to approximately 40 degrees, or alternatively 10 degrees to 35 degrees relative to the joining plane 34 (see FIG. 4).

As shown in FIG. 2, second component 50 is a unitary pre-formed erosion shield 54. In an alternative embodiment, second component 50 is an unshaped erosion shield that requires further machining after joining to the desired geometry. Erosion shield 54 is pre-formed to the desired dimensions for component, such as for example, leading edge 18 of airfoil 12. The pre-formed second component 50 is constructed from erosion resistant materials including cobalt, chromium, tungsten, carbon, nickel, iron, silicon, molybdenum, manganese, alloys thereof and combinations thereof. Suitable examples of material for second component 50 include, but are not limited to, cobalt-chromium based alloys, such as for example STELLITE® materials, such as STELLITE® 6 and 6B, available from the Deloro Stellite Group, Goshen, Indiana.

Second joining surface includes bevel angle 84 from approximately 0 degrees to approximately -45 degrees, or alternatively approximately -5 degrees to approximately -40 degrees, or alternatively -10 degrees to -35 degrees relative to the joining plane 34 (see FIG. 4). Without being bound by theory bevel angle 82 and 84 allows for a functional joining surface while preventing carbon migration from the underlying first component 40 to the second component 50.

As shown in FIG. 3, which is a perspective view of applying intermediate layers 70 using laser cladding apparatus 30, the first surface 42 of first component 40 is aligned adjacent to second surface 52 of second component 52. In one embodiment, a tacking weld 90 is used to temporarily hold first component 40 and second component 50 in position prior to laser cladding. In an alternative embodiment, fixturing is used to hold first component 40 and second component 50 in place. Examples of fixturing include using clamps or other holding means to align and hold first and second component 40 and 50 in position prior to laser cladding.

As shown in FIGS. 3 and 4, the first surface 42 of first component 40 and second surface 52 of second component 50 are joined along joining plane 34 in back and forth weld direction 68 along the length 86 by laser cladding. Joining material 32 includes at least one joining layer 36 and can include any number of joining layers 36 necessary to attach the first surface 42 and second surface 52. In one embodiment, joining material 32 is a material having material properties that are intermediate to first component 40 and second component 50. Joining material 32 is selected from materials including nickel, chromium, iron, silicon, molybdenum, niobium, cobalt, manganese, copper, aluminum, titanium, alloys thereof, and combinations thereof. Suitable examples of joining material 32, include but are not limited to of austenitic nickel-chromium-based superalloys, such as, for example INCONEL® materials, including INCONEL® 600 and 625, available from Special Metals Corporation, Huntington, West Virginia and cobalt-chromium based alloys, such as, for example STELLITE® materials, including STELLITE® 6 and 6B, available from the Deloro Stellite Group, Goshen, Indiana.

As shown in FIG. 4, in one embodiment, an optional intermediate layer 70 is applied to first surface 42 and second surface 52 of first and second components 40 and 50 prior to joining by laser cladding. In an alternative embodiment, intermediate layer 70 is applied only to one of first surface 42 or second surface. In yet another embodiment, no intermediate layer 70 is applied to first surface 42 or second surface 52 prior to joining first component 40 and second component 50 by laser cladding. Intermediate layer 70 is selected from nickel, chromium, iron, silicon, molybdenum, niobium, cobalt, manganese, copper, aluminum, titanium, alloys thereof, and combinations thereof. Suitable examples of intermediate layer 70, include but are not limited to of austenitic nickel-chromium-based superalloys, such as, for example INCONEL® materials, including INCONEL® 600 and 625, available from Special Metals Corporation, Huntington, West Virginia. In one embodiment, intermediate layer 70 is applied at a thickness of approximately 0 millimeters to approximately 2 millimeters or alternatively 0.3 millimeters to approximately 1.5 millimeters or approximately 0.4 millimeters to approximately 1.0 millimeters. Without being bound by theory intermediate layer 70 acts as a protective layer and prevents carbon migration from the underlying first component 40 to the second component 50.

As shown in FIG. 3, laser cladding to join first surface 42 of first component 40 with second surface 52 of second component 50 proceeds from tack weld 90 or at the center-most adjacent point between first component 40 and second component 50 along joining plane 34 to end length 86 of components along weld direction 68. Additionally, laser cladding can start from an end of the component and head towards tack weld in weld direction 68. The laser cladding apparatus 30 deposits joining material 32, which is originally powder 60 from nozzle 62 and is melted by laser beam 64 to form at least one joining layer 36 between first surface 42 and second surface 52. This process is repeated on the adjacent side.

A method 500 for preventing erosion of base component 12 used in an erosive environment is shown in FIG. 5. The method 500 includes providing an erosion preventative component 54, step 502. The erosion preventive component 54 is constructed from a singular finished structure, generally constructed material such as from STELLITE® 6. Next, erosion preventative component 54 is aligned with base component 12 or airfoil along joining plane 34 (see FIG. 3), step 504. Optionally, erosion preventive component 54 and base component 12 are temporality joined or fixtured using a temporary tack or spot weld 90 or other fixturing means such as clamps (see FIG. 3), step 706. Optionally, intermediate layer 70 is applied to one or both of joining surfaces 42 and/or 52 of base component 12 or erosion preventative component 54, (see FIG. 4) step 508. Next, erosion preventative component 54 and base component 12 are joined using high-density energy irradiation in weld direction 68, such as laser cladding (see FIG. 3), step 510. Step 510 includes joining material 32 that is excited by high-density energy irradiation or laser beam 64 and joining material 32 fuses erosion preventative component 54 to the base component 12.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A method of joining at least two components comprising:
   providing a laser cladding apparatus;
   aligning a first component having a first joining surface, the first joining surface of the first component adjacent to a second joining surface of a second component;
   joining the first joining surface and the second joining surface of the first and second components along a joining plane by laser cladding, wherein a joining material from the laser cladding apparatus provides at least one joining layer between the first joining surface and the second joining surface, and wherein the first and second joining surfaces include a bevel angle.
2. The method of clause 1, wherein the laser of the laser cladding apparatus is a CO₂ laser; YAG, LED, Solid state using a shielding gas.
3. The method of any preceding clause, wherein the method further includes tack welding or fixturing a first component to a second component prior to the step of joining.
4. The method of any preceding clause, wherein the bevel angle of the first joining surface is approximately 0 degrees to approximately 45 degrees relative to the joining plane.
5. The method of any preceding clause, wherein the bevel angle of the second joining surface is approximately 0 degrees to approximately -45 degrees relative to the joining plane.
6. The method of any preceding clause, wherein the first component is a component subject to an erosive environment.
7. The method of any preceding clause, wherein the second component is an erosion shield.
8. The method of any preceding clause, wherein the first component is clad with at least one intermediate layer prior to the step of joining.
9. The method of any preceding clause, wherein the second component is clad with at least one intermediate layer prior to the step of joining.
10. The method of any preceding clause, wherein the first component is selected from a gas turbine blade alloy.
11. The method of any preceding clause, wherein the second component is selected from materials comprising cobalt, chromium, tungsten, carbon, nickel, iron, silicon, molybdenum, manganese, alloys thereof, and combinations thereof.
12. The method of any preceding clause, wherein the joining material is selected from materials having mechanical properties between the first component and the second component
13. A method for rendering a component resistant to erosion comprising:
   providing a first component and an erosion preventative component, the erosion preventive component comprising a unitary structure,
   aligning the first component with the erosion preventative component along a joining plane;
   joining the first component with the erosion preventative component using high-density energy irradiation, wherein the step of joining includes a joining material that is excited by the high-density energy irradiation, wherein the joining material fuses the erosion preventative component to the first component, wherein the first component and the erosion preventive component include a bevel angle.
14. The method of any preceding clause, wherein the bevel angle is approximately 45° to approximately -45° from the joining plane
15. The method of any preceding clause, wherein the erosion preventative component is selected from materials comprising cobalt, chromium, tungsten, carbon, nickel, iron, silicon, molybdenum, manganese, alloys thereof and combinations thereof.
16. The method of any preceding clause, wherein the joining material is selected from materials having properties between the first component and the erosion preventative component.
17. The method of any preceding clause, wherein the high-density irradiation is performed by a laser cladding apparatus.
18. A turbine blade comprising:
   an airfoil having a leading edge;
   an erosion shield joined to the leading edge of the airfoil with a joining material, wherein the airfoil and erosion shield are joined by at least one joining layer formed by the joining material and a laser cladding process, and wherein the first and second joining surfaces include a bevel angle.
19. The turbine blade of any preceding clause, wherein the erosion shield is selected from cobalt, chromium, tungsten, carbon, nickel, iron, silicon, molybdenum, manganese, alloys thereof and combinations thereof.
20. The turbine blade of any preceding clause, wherein the joining material is selected from materials having properties between the airfoil and the erosion shield.

## Claims

1. A method (500) of joining at least two components comprising:
providing (502) a laser cladding apparatus (30);
aligning (504) a first component (40) having a first joining surface (42), the first joining surface (42) of the first component (40) adjacent to a second joining surface (52) of a second component (50);
joining (510) the first joining surface (42) and the second joining surface (52) of the first and second components (40, 50) along a joining plane (34) by laser cladding, wherein a joining material (32) from the laser cladding apparatus (30) provides at least one joining layer (36) between the first joining surface (42) and the second joining surface (52), and wherein the first and second joining surfaces (42, 52) include a bevel angle (82, 84).

2. The method (500) of claim 1, wherein the method (500) further includes tack welding (90) or fixturing the first component (40) to the second component (50) prior to the step of joining.

3. The method (500) of any preceding claim, wherein the bevel angle (82) of the first joining surface (42) is approximately 0 degrees to approximately 45 degrees relative to the joining plane (34).

4. The method (500) of any preceding claim, wherein the bevel angle (84) of the second joining surface (52) is approximately 0 degrees to approximately -45 degrees relative to the joining plane (34).

5. The method (500) of any preceding claim, wherein the second component (50) is an erosion shield (54).

6. The method (500) of any preceding claim, wherein the first component (40) is clad with at least one intermediate layer (70) prior to the step of joining (510).

7. The method (500) of any preceding claim, wherein the second component (50) is clad with at least one intermediate layer (70) prior to the step of joining (510).

8. The method (500) of any preceding claim, wherein the joining material (32) is selected from materials having mechanical properties between the first component (40) and the second component (50).

9. A method (500) for rendering a component (40) resistant to erosion comprising:
providing (502) a first component (40) and an erosion preventative component (54), the erosion preventive component (54) comprising a unitary structure;
aligning (504) the first component (40) with the erosion preventative component (54) along a joining plane (34); and
joining (510) the first component (40) with the erosion preventative component (54) using high-density energy irradiation, wherein the step of joining (510) includes a joining material (32) that is excited by the high-density energy irradiation, wherein the joining material (32) fuses the erosion preventative component (54) to the first component (40), wherein the first component (40) and the erosion preventive component (54) include a bevel angle (82, 84).

10. The method (500) of claim 9, wherein the joining material (32) is selected from materials having properties between the first component (40) and the erosion preventative component (54).

11. A turbine blade (10) comprising:
an airfoil (12) having a leading edge (18);
an erosion shield (54) joined to the leading edge (18) of the airfoil (12) with a joining material (32), wherein the airfoil (12) and erosion shield (54) are joined by at least one joining layer (36) formed by the joining material (32) and a laser cladding process, and wherein the first and second joining surfaces (42, 52) include a bevel angle (82, 84).

12. The turbine blade (10) of claim 11, wherein the erosion shield (54) is selected from cobalt, chromium, tungsten, carbon, nickel, iron, silicon, molybdenum, manganese, alloys thereof and combinations thereof.

13. The turbine blade (10) of claim 11 or claim 12, wherein the joining material (32) is selected from materials having properties between the airfoil (12) and the erosion shield (54).
